Europäisches Patentamt

European Patent Office

Office européen des brevets

(11) Publication number: **0 225 722**
**A1**

(12) **EUROPEAN PATENT APPLICATION**

(21) Application number: **86308651.8**

(22) Date of filing: **06.11.86**

(51) Int. Cl.⁴: **B65B 35/22** , B65G 47/57

(30) Priority: **20.11.85 AU 3495/85**

(43) Date of publication of application:
**16.06.87 Bulletin 87/25**

(84) Designated Contracting States:
**AT BE CH DE ES FR GB GR IT LI LU NL SE**

(71) Applicant: **Karpisek, Ladislav Stephan**
**86 Woodfield Boulevarde**
**Caringbah, N.S.W. 2229(AU)**

(72) Inventor: **Karpisek, Ladislav Stephan**
**86 Woodfield Boulevarde**
**Caringbah, N.S.W. 2229(AU)**

(74) Representative: **King, James Bertram**
**Kings Patent Agency Limited Wardrobe**
**Court 146a Queen Victoria Street**
**London EC4V 5AT(GB)**

(54) **A load transfer station.**

(57) A load transfer station including two normally horizontal support surfaces at different elevations respectively associated with two pivotally mounted supports. The pivot mountings being such that a load placed on one support surface will cause the associated support to pivot and actuate means interconnecting the supports to pivot the other support and bring the support surfaces into substantially co-planar relationship thereby allowing a load to transfer from one to the other, and means to lock the supports with both support surfaces either horizontal or inclined.

FIG. 3.

P

EP 0 225 722 A1

## "A LOAD TRANSFER STATION"

This invention provides a load transfer station.

A typical use of the invention would be where a loaded pallet needs to have work performed thereon, as for example to be wrapped by the technique known commercially as "Stretch N Shrink", and time needs to be saved in the utilisation of the fork lift truck used for transporting pallets from a pallet holding area to the wrapping station. In such a case if there were to be only the stand upon which the load was placed for the wrapping operation then the procedure would be as follows, assuming that there was already a wrapped load at the work station:-

1. The fork lift truck would bring an unwrapped loaded pallet and set it down on the floor adjacent the work station.

2. The truck would then lift the wrapped loaded pallet from the work station to a rest position adjacent thereto.

3. The truck would then place the unwrapped loaded pallet on the work station.

4. The truck would then raise the previously wrapped loaded pallet from the rest position and transport it to an area set aside for wrapped loaded pallets.

The procedure would be repeated and it will be seen that there is a four step time consuming sequence of pallet lifting and lowering. Because of the capital cost of the fork lift truck and the cost for its operation in fuel and manpower it is desirable to use it in the most time effective manner and it is in order to achieve this objective that the present invention has been devised.

In the proposed arrangement there is a load transfer station including a work zone where work (e.g. wrapping) can be done on a loaded pallet and which allows the wrapping equipment operative to divert the wrapped load from the work zone to a holding zone in anticipation of the arrival of the next unwrapped loaded pallet, which can be placed immediately in the work zone. After deposit of the unwrapped load the previously wrapped load can be removed from the holding zone. There is thus an immediate saving in the operations of the truck in depositing and removing loaded pallets prior to and subsequent to wrapping.

Broadly stated the invention can be said to comprise a load transfer station comprising a first support member having a support surface, the first support member is pivotal so the support surface can adopt a substantially horizontal orientation or an inclined orientation where it is at an angle to the horizontal the axis of pivot of the first support member being located so that when a load is placed on the support surface when in the horizontal orientation the load will cause the first support member to adopt the inclined orientation, a second support member having a support surface, the second support member is pivotal so the support surface of the second support member can adopt a substantially horizontal orientation or a inclined orientation where it is at an angle to the horizontal and is substantially co-planar with the support surface of the first support member when it is in its inclined orientation and forms a lower level extension of the first support surface, the location of the axis of pivot of the second support member being such that when a load is placed on the support surface of the second support member when it is in its inclined orientation the load will cause the second support member to adopt its substantially horizontal orientation, means interconnecting the first and second support members so that movement of the support surface of first support member from its horizontal to its inclined orientation will cause the support surface of the second support member to move from its horizontal orientation to its inclined orientation and vice versa, and means to lock the support members in their horizontal and inclined orientations.

Several presently preferred forms of the invention will now be described with referecne t the accompanying drawings in which:-

Fig.I is a side elevation of one form of the load transfer station when in a load receiving condition,

Fig.2 is a view similar to Fig.I showing a load mounted in operative position,

Fig.3 is a view similar to Fig.I showing a load about to transfer from one support member of the load transfer station to another support member thereof,

Fig.4 is a view similar to Fig.3 showing the load after transfer,

Fig.5 is a view similar to Fig.I when returned to load receiving condition from the configuration of Figs.3 and 4,

Fig.6 is a view similar to Fig.I with a version of the load transfer station of Fig.I integrated into a continuous materials handling system,

Fig.7 shows the next step in a load transfer using the Fig.6 version of the invention,

Fig.8 is the next step in a load tranfer using the Fig.6 version of the invention and

Fig.9 shows the final step in a load transfer using the Fig.6 version of the invention.

In Figs.I to 5 the load transfer station includes a work zone I where work can be done on a loaded pallet, for example a wrapping operation where the pallet and its load is wrapped in a plastic film memberane. The load transfer station also includes a holding zone 2 where the load after wrapping waits for a further operation to be performed, e.g. transfer to a storage zone in a factory. The work zone is comprised of a stand 3 with ground engaging legs 4 having a generally rectangular load support member 5 pivotally connected to the stand 4 as indicated at 6. The holding zone is comprised of a stand 7 with ground engaging legs 8 having a generally rectangular load support member 9 pivotally connected to the stand 7 as indicated at I0. It will be noted that the support members 5 and 9 are at different elevations and as illustrated the load supporting top surfaces thereof, comprised of idler rollers II, are in substantially horizontal planes.

The support members 5 and 9 are interconnected by a positive force applying system, in this case a hydraulic system indicated generally I2 and comprised of two cylinders I3 and I4 having pistons therein with piston rods I5 and I6 respectively connected to the load support members 5 and 9. The cylinders I3 and I4 are interconnected by a hydraulic line I7 which includes a flow control valve I8. The cylinders are mounted in a manner allowing then to pivot slightly to accomodate the pivotal movement of the support members 5 and 9.

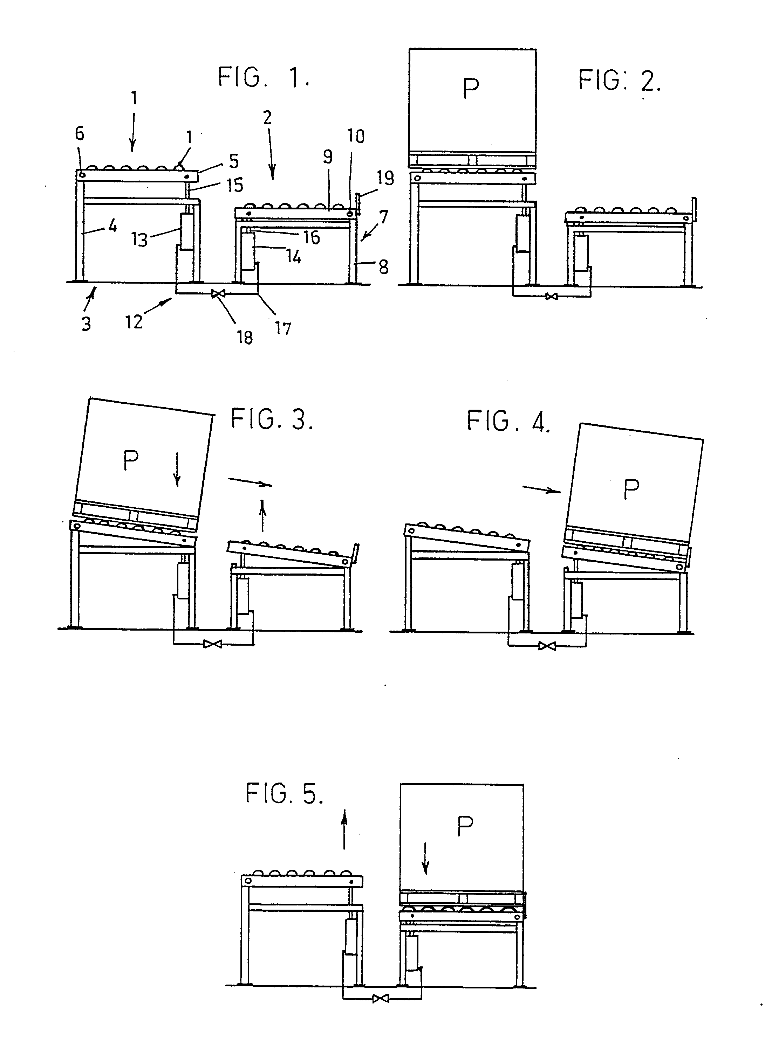

Fig.2 illustrated a typical arrangement with a loaded pallet P on the rollers I2 of the support members 5.

Fig.3 illustrates the initial phase in a pallet transfer. More specifically, after the work required to be done to the loaded pallet has been performed, e.g.plastic wrapping, the valve I8 is opened. Because of the manner of pivoting the support 5 to the stand 4 gravity, acting on the loaded pallet in the absence of the hydraulic lock provided by the valve I8, will cause the support 5 to pivot in a clockwise direction, as shown. The resultant displacement of hydraulic fluid in the closed hydraulic system causes the unladen support members 9 to pivot in the opposite direction, as shown. Stops of any suitable type, not illustrated, are provided to limit the upward and downward pivotal movements of the support members 5 and 9 and to ensure that when both support members 5 and 9 are pivoted the load supporting surfaces thereof, defined by the tops of the rollers I2, are co-planar with the support surface of the support member 9 providing in practice and extension of the support surface of the support member 5. When the support members 5 and 9 are in the positions shown in Fig.3 the valve I8 is closed to lock the support members 5 and 9 in the tilted orientation.

The drawings are exaggerated as to angle adopted by the support members 5 and 9 and in practice the angle of the support members is such that it will require a small physical effort to cause the pallet to roll from the support member 5 to the support member 9 where its movement will be terminated by a fixed stop I9, as illustrated in Fig.4.

By opening the valve I8 after the Fig.4 condition is achieved the effect of gravity on the loaded pallet will cause the support 9 to pivot in an anti-clockwise direction to its rest position. The displacement of the hydraulic fluid in the system will cause the support 5 to move to its horizontal position where stop means as mentioned earlier will arrest the movement of the support members 5 and 9. By closing the valve I8 the operator in charge of the apparatus can lock the support members 5 and 9 in the rest positions.

Whilst hydraulic connections have been discussed above it is obvious that mechanical devices such as chains and pulleys or sprockets, or cables and pulleys or other mechanical means can be used to achieve the positive inter-connection between the supports 5 and 9 with the same effectiveness in operation as is achieved with the hydraulic system described. The hydraulic valve I8 described above would be replaced by a mechanical lock of suitable form. From a practical viewpoint however, it has been found that simplicity and reliability are achieved with a hydraulic system as described above.

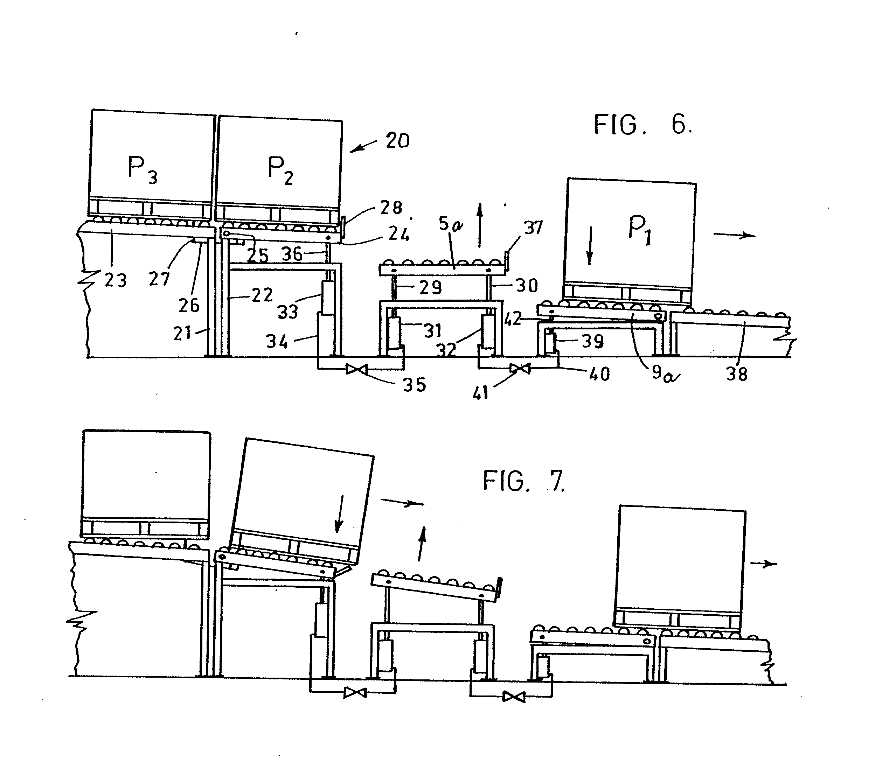

Figs.6 to 9 illustrate the integration of the load transfer station just described into a system including a load delivery zone 20 and a load discharge zone to be described later. As illustrated the delivery zone is made up of frames 2I and 22 respectively provided with an inclined roller equipped pallet support 23 and 24. The inclination of support 23 and 24 is desirable but not essential to the operation of the apparatus. The support 23 is fixed and the support 24 is pivotally connected at 25 to the frame 22. There is a an arm 26 on the support 24 which moves with the support 24 so that when the support is in the inclined position shown in Fig.6 a portion 27 of the arm 26 lies below the pallet support plane defined by the upper surfaces of the rollers of the members 23 and 24 and when the support 24 is pivoted the portion 27 projects between two rollers of the support 24, as can be seen in Fig.7.

There is a movable travel limiting stop 28 on the lowest edge of the support 24 for reasons that will be describd hereinafter.

The load transfer station as described with reference to Figs.I to 5 is modified in this arrangement in that the support member 5a is not permanently pivotally connected to a frame but has its ends respectively pivotally connected to pistons rods 29 and 30 mounted in cylinders 3I and 32 respectively. In this way the support members 5a is able to move vertically at both ends in tracks or other suitable guides. The cylinder 3I is linked to a cylinder 33 with the piston rod 36 of cylinder 33 connected the support 24. The cylinders 3I and 33 are linked by a hydraulic line 34 including a valve 35 to control the flow of hydraulic fluid in the line 34.

It will be noted that there is a movable stop 37 on the support member 5a and that the holding zone is defined by an arrangement very similar to that described with reference to the Figs.I to 5, the differences being the deletion of the stop I9 and the very slight initial inclination of the support members 9a. The cylinders 32 and 39 with their interconnecting hydraulic line 40 and valve 4I operate in the same was as the members I3,I4,I7 & I8 of Fig.I.

Fig.6 shows what can be termed the "ready" condition with the valves 35 and 4I closed and the support member 5a horizontal and the support member 9a in a rest condition in which it is slightly inclined to allow gravitational discharge of the load PI onto the discharge zone conveying ramp 38 after wrapping, or other work, has been done thereon. This is the preferred arrangement but the support member 9a can be horizontal when in the rest condition, as per the Fig.I arrangement, if desired. There is a loaded pallet P2 resting on the inclinded support 24 held in place by the stop 28 and there is a second loaded pallet P3 waiting behind loaded pallet P2.

Fig.7 illustrates the next operation in which the valve 35 is opened, the weight of P2 causes the piston rod 36 to retract into cylinder 33 and the piston rod 29 to extend from the cylinder 3I. The leading end of the support member 5a is thereby elevated so the support members 24 and 5a provide a substantially continuous co-planar surface. The valve 35 is closed and then the stop 28 is removed, lowered or otherwise made inoperative and P2 will roll onto the support member 5a. It is to be noted that as the support member 24 pivots the arm portion 27 moves upwardly immobilising P3. With P2 now on the support member 5a resting against stop 37 the stop 28 is raised to its operative position as shown in Fig.6. The valve 35 is opened, the weight of P2 will cause the piston rod 29 to retract and the piston rod 36 to extend to restore the supports 24 and 5a to the Fig.6 condition. The valve 35 is closed and as this is happening the arm portion 27 disengages from P3 and it can be pushed along the slight incline up to the stop 28.

Wrapping or other work can now be done on P2 as it rests on the horizontal support member 5a.

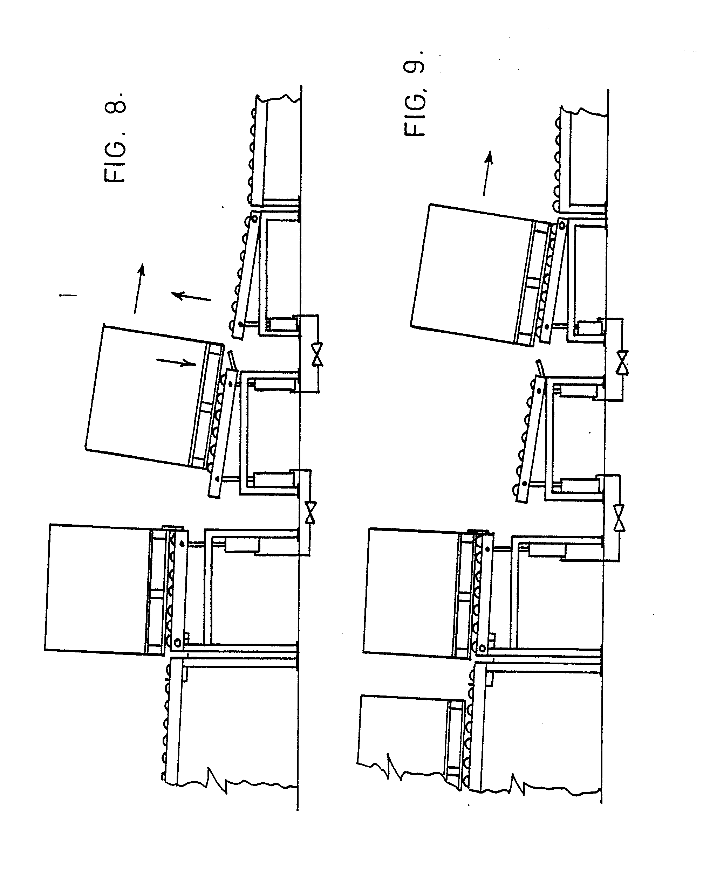

Figs.8 and 9 illustrate the next operating sequences. The valve 4I is opened, the piston rod 30 retracts and the piston rod 42 extends so that the upper surfaces of the support members 5a and 9a are co-planar and are substantially continuous. The valve 4I is closed and the stop 37 is made inoperative allowing P2 to pass from support member 5a to support member 9a. The valve 4I is opened the and the weight of P2 causes the piston rod 42 to retract and the piston rod 30 to extend. The result is the restoration of the apparatus to the Fig.6 configuration whereupon the valve 4I is closed and the stop 37 is returned to the operative position.

The sequences described with respect to Fig.6 to 9 can be repeated again and again as required.

As will be understood the roller conveyor portion 38 is for convenience and the support member 9a could be provided with a stop I9 and be the final resting place for the loaded pallets after wrapping from whence they would be removed by fork truck, as in the Fig.I to 5 description.

## Claims

I A load transfer station comprising a first support member having a support surface, the first support member is pivotal so the support surface can adopt a substantially horizontal orientation or an inclined orientation where it is at an angle to the horizontal the axis of pivot of the first support member being located so that when a load is placed on the support surface when in the horizontal orientation the load will cause the first support member to adopt the inclined orientation, a second support member having a support surface, the second support member is pivotal so the support surface of the second support member can adopt a substantially horizontal orientation or a inclined orientation where it is at an angle to the horizontal and is substantially co-planar with the support surface of the first support member when it is in its inclined orientation and forms a lower level extension of the first support surface, the location of the axis of pivot of the second support member being such that when a load is placed on the support surface of the second support member when it is in its inclined orientation the load will cause the second support member to adopt its substantially horizontal orientation, means interconnecting the first and second support members so that movement of the support surface of the first support member from its horizontal to its inclined orientation will cause the support surface of the second support member to move from its horizontal orientation to its inclined orientation and vice versa, and means to lock the support members in their horizontal and inclined orientations.

2. A load transfer station as claimed in claim I wherein the load supporting surfaces of the load support members include roller members with axes of rotation parallel to the axes of pivot of the support members whereby loads can pass readily from the first support member to the second support member when the supporting surfaces thereof are co-planar.

3. A load transfer station as claimed in claim I or claim 2 wherein the means interconnecting the first and second support members is a hydraulic system including a first piston in cylinder arrangement having its cylinder fixed and having its piston connected through a rod to the first support member and a second piston in cylinder arrangement having its cylinder fixed and having its piston connected through a rod to the second support member with hydraulic pipework connecting said cylinders so that pivotal movement of one of said support members will cause a flow of hydraulic fluid between said cylinders with resultant movement of the other of said support members, and the lock means is a valve in the hydraulic pipework whereby the flow of hydraulic fluid between said cylinders can be regulated or stopped as required.

4. A load transfer station as claimed in anyone of claims I to 3 wherein the second support member includes a stop means at one side which will be the lowest side of the load support surface when the second support member is in the inclined orientation.

5. A load transfer station as claimed in claim 3 in combination with a feeding assembly including a pivotal feed table, the pivotal connection of the first support member being to the piston rod of a third piston and cylinder combination where the cylinder thereof is fixed and the pivotal movement of the feed table is controlled by a fourth piston and cylinder combination with the cylinder fixed and the feed table connected to the piston rod thereof, the third and fourth piston and cylinder combinations being interconnected by hydraulic pipework including a valve, the feed table when pivoted causing the first support member to be inclined so that the support surface of the first support member is co-planar with the inclined feed table and provides an extension thereof.

6. A load transfer station as claimed in claim 5 wherein the feed table is part of a feed conveyor whereby loads are delivered to the feed table, and wherein the feed table by adopting a pivoted orientation effects the introduction of a stop means into the conveyor system to prevent loads being delivered from the feed conveyor to the feed table whilst it is pivoted.

FIG. 1.

FIG: 2.

FIG. 3.

FIG. 4.

FIG. 5.

FIG. 6.

P₃  P₂  20

P₁

FIG. 7.

0 225 722

FIG. 8.

FIG. 9.

0 225 722

## DOCUMENTS CONSIDERED TO BE RELEVANT

EP 86308651.8

| Category | Citation of document with indication, where appropriate, of relevant passages | Relevant to claim | CLASSIFICATION OF THE APPLICATION (Int. Cl.4) |
|---|---|---|---|
| A | US - A - 2 038 758 (PAXTON) <br> * Fig. 10,11 * <br> -- | 1,2 | B 65 B 35/22 <br> B 65 G 47/57 |
| A | US - A - 3 923 084 (MATTHEWS et al.) <br> * Pos. 380,381 * <br> -- | 1 | |
| A | WO - A1 - 83/03 592 (ITS-...) <br> * Totality * <br> ---- | 1,2 | |

**TECHNICAL FIELDS SEARCHED (Int. Cl 4)**

B 65 B 35/00

B 65 B 43/00

B 65 B 61/00

B 65 G 47/00

The present search report has been drawn up for all claims

| Place of search | Date of completion of the search | Examiner |
|---|---|---|
| VIENNA | 25-02-1987 | MELZER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82